(19) Europäisches Patentamt
European Patent Office
Office européen des brevets

(11) Veröffentlichungsnummer: **0 316 740**
**A2**

(12) # EUROPÄISCHE PATENTANMELDUNG

(21) Anmeldenummer: **88118640.7**

(51) Int. Cl.⁴: **C08G 75/02**

(22) Anmeldetag: **09.11.88**

(30) Priorität: **20.11.87 DE 3739340**

(43) Veröffentlichungstag der Anmeldung:
**24.05.89 Patentblatt 89/21**

(84) Benannte Vertragsstaaten:
**BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Alewelt, Wolfgang, Dr.**
**Stratumer Feld 17**
**D-4150 Krefeld 12(DE)**
Erfinder: **Alfes, Franz, Dr.**
**Kruse Boemke 7**
**D-4150 Krefeld 1(DE)**
Erfinder: **Eisermann, Wolfgang, Dr.**
**Auf der Krone 22**
**D-4000 Düsseldorf 31(DE)**
Erfinder: **Leontaritis, Lambis, Dr.**
**Heinrich-Klausmann-Strasse 151**
**D-4150 Krefeld 1(DE)**
Erfinder: **Tresper, Erhard, Dr.**
**Moerser Strasse 394**
**D-4150 Krefeld 11(DE)**

(54) **Verfahren zur Herstellung von hochmolekularen, gegebenenfalls verzweigten Polyarylensulfiden.**

(57) Die Erfindung betrifft ein Verfahren zur Herstellung von hochmolekularen, gegebenenfalls verzweigten Polyarylensulfid (PAS), vorzugsweise Polyphenylensulfid (PPS) in einer speziellen Apparatur.

EP 0 316 740 A2

## Verfahren zur Herstellung von hochmolekularen, gegebenenfalls verzweigten Polyarylensulfiden

Die Erfindung betrifft ein Verfahren zur Herstellung von hochmolekularen, gegebenenfalls verzweigten Polyarylensulfiden (PAS), vorzugsweise Polyphenylensulfid (PPS) in einer speziellen Apparatur.

Polyarylensulfide und ihre Herstellung sind bekannt, z.B. US-PS 25 13 188, 31 17 620, 33 54 129, EP-OS 171 021 u.s.w.

Weiterhin ist bekannt, daß bei der Herstellung von PPS Korrosionsprobleme an den bei der Umsetzung verwendeten Gefäßen auftreten (z.B. DE-OS 35 24 471).

Durch diese Korrosion können die hergestellten Polyarylensulfide unerwünschte Farbeigenschaften, Molgewichte etc. bekommen.

Es wurde nun gefunden, daß hochmolekulare, gegebenenfalls verzweigte Polyarylensulfide mit erhöhter Schmelzviskosität ohne zusätzliche Härtung direkt aus der Um setzung erhalten werden können, wenn die Polymerisationsreaktion in einer Umsetzungsapparatur durchgeführt wird, in der zumindest diejenigen Teile der Apparatur, die mit der Reaktionslösung, vorzugsweise der zu entwässernden Sulfidlösung, in Berührung kommen, aus speziellen Materialien gebaut sind oder mit speziellen Materialien beschichtet sind, ausgewählt aus der Gruppe von für diesen Zweck besonders geeigneten Metallen wie Edelmetallen (z.B. Platin, Rhodium etc.), Zirkon, Tantal, 1.4575 (Superferrit) etc. oder inerten Polymeren wie Teflon, PPS etc.

Gegenstand der Erfindung ist somit ein Verfahren zur Herstellung von gegebenenfalls verzweigten Polyarylensulfiden nach den bekannten Verfahren aus

a) 50 bis 100 Mol-% Dihalogenaromaten der Formel

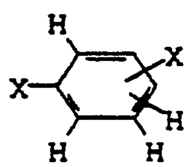

(I),

und 0 bis 50 Mol-% Dihalogenatomen der Formel

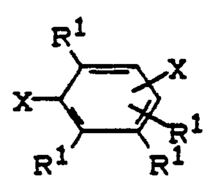

(II),

in denen

X für zueinander meta- oder para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander ortho-ständige Reste $R^1$ zu einem aromatischen oder heterocyclischen, bis zu drei Heteroatome wie N, O, S enthaltenden Ring verknüpft sein können und immer ein Rest $R^1$ verschieden von Wasserstoff ist und

b) 0 bis 5 Mol-%, bevorzugt 0,1 bis 2,5 Mol-%, bezogen auf die Summe der Dihalogenatomen der Formeln (I) und (II), eines Tri- oder Tetrahalogenaromaten der Formel

$ArX_n$ (III),

wobei

Ar ein aromatischer oder heterocyclischer Rest ist,

X für Halogen wie Chlor oder Brom steht und

n für die Zahl 3 oder 4 steht und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von (a+b):c im Bereich von 0,5:1 bis 1,5:1, bevorzugt von 0,75:1 bis 1,25:1, liegen kann, in

d) einem organischen Lösungsmittel und gegebenenfalls einem Katalysator,

dadurch gekennzeichnet, daß die Umsetzung in einer an sich bekannten Apparatur durchgeführt wird, in der zumindest diejenigen Teile der Apparatur, die mit der Reaktionslösung, vorzugsweise der zu entwässernden Sulfidlösung in Berührung kommen, aus speziellen Materialien gebaut sind oder mit speziellen Materialien beschichtet sind, ausgewählt aus der Gruppe von für diesen Zweck besonders Metallen wie Edelmetallen wie Platin, Rhodium, Zirkon Tantal, Superferrit oder inerten Polymeren wie Teflon, PPS.

Das molare Verhältnis von Alkalisulfiden c) zu dem organischen Lösungsmittel d) soll dabei im Bereich von 1:1,5 bis 1:15 liegen.

Die Reaktionszeit kann bis zu 48 Stunden betragen und liegt vorzugsweise zwischen 2 und 18 Stunden. Die Reaktionstemperaturen liegen zwischen 150°C und 280°C. Die Reaktionsführung kann in verschiedener Weise erfolgen.

Die Alkalisulfide werden vorzugsweise in Form ihrer Hydrate und wäßrigen Mischungen oder wäßrigen Lösungen eingesetzt. Die Entwässerung kann dabei partiell oder vollständig erfolgen, wobei entweder das Alkalisulfid in einem vorgeschalteten Schritt im erfindungsgemäß eingesetzten Gefäß ohne Anwesenheit der Di- und/ oder Polyhalogenaromaten zunächst zusammen mit dem organischen Lösungsmittel und gegebenenfalls dem Katalysator, gegebenenfalls unter Zuhilfenahme eines Azeotropbildners bzw. Wasserschleppers wie z.B. Toluol, oder das gesamte Reaktionsgemisch im erfindungsgemäß verwendeten Gefäß direkt entwässert wird und dabei z.B. die Di- und Polyhalogenaromaten als Azeotropbildner dienen können.

Wird nur partiell entwässert, so sollte gegebenenfalls unter Druck gearbeitet werden, um die nötigen Reaktionstemperaturen zu erreichen. Die Alkalisulfide können auch für sich alleine separat durch Anlegen von Temperatur und Vakuum getrocknet und dem Reaktionsgemisch zugegeben werden. Die Trocknung der Alkalisulfide kann ebenfalls in dem erfindungsgemäß verwendeten Gefäß durchgeführt werden.

Wird völlig entwässert, was vorzugsweise in Anwesenheit aller Reaktionspartner und mit dem Di- und Polyhalogenaromaten als Wasserschlepper durchgeführt werden kann, so kann druckfrei bzw. druckarm umgesetzt werden. Zur Erzielung von höheren Reaktionstemperaturen über den Siedepunkt des Lösungsmittels bzw. der Mischung aus Lösungsmittel und Di- und Polyhalogenaromaten hinaus, kann höherer Druck bis zu 50 bar angewendet werden.

Die Zugabe der Reaktionspartner kann in mehrfacher Weise erfolgen.

Es können alle Reaktionspartner direkt im erfindungsgemäß verwendeten Gefäß zusammengegeben werden, ohne eine kontinuierliche bzw. dosierte Zugabe eines oder mehrerer Reaktionspartner durchgeführt werden.

Die Aufarbeitung des Umsetzungsgemisches und die Isolierung der Polyarylensulfide kann in bekannter Weise erfolgen.

Das Polyarylensulfid kann direkt aus der Reaktionslösung oder erst z.B. nach Zugabe von Wasser und/oder verdünn ten Säuren oder organischen Lösungsmitteln, vorzugsweise solchen mit geringer Löslichkeit für Polyarylensulfide, nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die im Sinne der Erfindung eingesetzten Ester und Anhydride können Ester und Anhydride von aliphatischen oder aromatischen Mono-, Di- und Polycarbonsäuren sein. Die $C_2$-$C_{12}$-aliphatischen oder $C_5$-$C_7$-cycloaliphatischen oder $C_6$-$C_{14}$-aromatischen Mono-, Di- und Polycarbonsäurereste können Substituenten wie z.B. $C_6$-$C_{12}$-Aryl-, $C_1$-$C_4$-Alkyl-, $C_5$-$C_{10}$-Aryloxy-, $C_1$-$C_4$-Alkoxy-, $C_5$-$C_{10}$-Cycloalkoxy-Reste u.s.w. tragen.

Die Anhydride und Ester können intra- oder intermolekular vorliegen. Es sind auch z.B. gemischte Anhydride einsetzbar. Der Alkoholrest der Ester hat die Formel $-OR_2$, wobei $R_2$ ein $C_1$- bis $C_{18}$-Alkyl-, $C_5$-$C_{10}$-Cycloalkyl- oder $C_7$-$C_{19}$-Alkylarylrest ist.

Beispiele für geeignete Ester sind: Methylacetat, Ethylacetat, n-Propylacetat, n-Butylacetat, n-Amylacetat, Isobutylacetat, t-Butylacetat, Isoamylacetat, Methyl propionat, Ethylpropionat, Methyl-n-butyrat, Ethyl-n-butyrat, n-Propylbutyrat, Isoamyl-n-butyrat, Methyl-n-valerat, Ethyl-n-valerat, Methyl-iso-valerat, Ethyl-isovalerat, Ethyl-n-heptanolat, Ethylpelargonat, Methylbenzoat, Ethylbenzoat, n-Propylbenzoat, n-Butylbenzoat, Diethylphthalat, Dimethyloxalat, Diethyloxylat, Dimethylmalonat, Cyclohexancarbonsäuremethylester, Cyclohexancarbonsäureethylester u.s.w.

Biespiele für Katalysatoren sind Carbonsäureanhydride wie Essigsäureanhydrid, Propionsäureanhydrid, n-Buttersäureanhydrid, n-Valeriansäureanhydrid, Bernsteinsäureanhydrid, Glutarsäureanhydrid, Benzoesäureanhydrid, Cyclohexancarbonsäureanhydrid, Phthalsäureanhydrid u.s.w.

Es können Mischungen von Estern, Mischungen von Anhydriden und Mischungen von Estern mit Anhydriden verwendet werden.

Als Alkalisulfide sind z.B. Natrium- und Kaliumsulfid geeignet. Die Alkalisulfide können auch aus $H_2S$ und den Alkalihydroxiden bzw. aus den Hydrogensulfiden und Alkalihydroxiden erhalten werden.

Je nach Anteil von Alkalihydrogensulfid in der Reaktionslösung, das z.B. als Verunreinigung im Alkalisulfid enthalten sind kann oder während des Reaktionsprozesses entsteht, kann zusätzlich Alkalihydroxid zur Regenerierung von Alkalisulfid zudosiert werden. Gegebenenfalls können auch anstelle der Alkalihydroxide solche Verbindungen zugegeben werden, die unter den Reaktionsbedingungen Alkalihydroxide abspalten bzw. bilden.

Erfindungsgemäß können meta- oder para-Dihalogenaromaten der Formel (I) bzw. (II) eingesetzt werden. In diesem Fall kann das Verhältnis meta- zu para-Dihalogenaromaten bis zu 30:70 betragen.

Zur Erhaltung von thermoplastisch verarbeitbaren Polyphenylensulfiden werden bevorzugt p-Dihalogenaromaten eingesetzt.

Sollen verzweigte Polyarylensulfide hergestellt werden, müssen mindestens 0,05 Mol-% eines Tri- oder Tetrahalogenaromaten der Formel (III) eingesetzt werden.

Beispiele für erfindungsgemäß einzusetzende

Dihalogenaromaten der Formel (I) sind: p-Dichlorbenzol, p-Dibrombenzol, 1-Chlor-4-brombenzol, 1,3-Dichlorbenzol, 1,3-Dibrombenzol, 1-Chlor-3-brombenzol und 1-Chlor-3-brom-benzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlor-benzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlotoluol, 1,2,3,4-Tetrachlornapthalin, 1,2,4,5-Tetrachlorbenzol, 2,2′-, 4,4′-Tetrachlorbiphenyl, 1,3,5-Trichlor-triazin.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden jedoch cyclische Harnstoffe und Lactame und besonders bevorzugt N-Alkyllactame verwendet.

Beispielsweise kommen als Lösungsmittel in Frage: N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-piperidon, N-Methyl-3,4,5-trimethyl-2-pyrrolidon, N-Methyl-2-piperidon, N-Ethyl-2-piperidon, N-Isopropyl-2-piperidon, N-Isobutyl-2-piperidon, N-Methyl-6-methyl-2-piperidon, N-Methyl-3-ethyl-2-piperidon, N-Methyl-2-oxo-hexamethylenimin, N-Ethyl-2-oxo-hexamethylenimin.

Es können auch Mischungen der vorstehenden Lösungsmittel gewählt werden.

Die erfindungsgemäßen Polyarylensulfide können mit anderen Polymeren, wie Pigmenten und Füllstoffen, beispielsweise Graphit, Metallpulver, Glaspulver, Quarzmehl, Glasfasern oder Kohlefasern gemischt oder mit den für Polyarylensulfide üblichen Additiven, beispielsweise üblichen Stabilisatoren oder Entformungsmitteln, versetzt werden.

Im allgemeinen wird das Schmelzfließverhalten von Polyarylensulfiden nach ASTM 1238-70 bei 316° C unter Verwendung eines 5 kg-Gewichtes gemessen und in g/10 Minuten angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta$m der Polymerschmelze (in Pa.s) bei 306° C in Abhängigkeit von der Schubspannung $\tau$ (in Pa) mit Hilfe des Instron-Rotationsviskosimeters bestimmt.

Man kann auf diese Weise die Schmelzviskosität in einem sehr weiten Bereich von $10^{-1}$ bis $10^7$ Pa.s bestimmten. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron; Durchmesser des Kegels und der Platte 2 cm.

Angegeben wird die Schmelzviskosität, die bei einer Schubspannung von $\tau$ = $10^2$ Pa gemessen wird.

Die erfindungsgemäßen Polyarylensulfide, vorzugsweise die p-Polyarylensulfide besitzen direkt nach der Isolierung aus dem Reaktionsgemisch im allgemeinen Schmelzviskositäten von 0,3 x $10^3$ bis 5 x $10^6$ Pa.s, vorzugsweise von 1,5 x $10^3$ bis $10^4$ Pa.s und gute farbliche Eigenschaften. Sie können direkt durch Extrusion, Extrusionsblasen, Spritzgießen oder sonst übliche Verarbeitungstechniken zu Folien, Formkörpern und Fasern verarbeitet werden. Diese können in üblicher Weise Verwendung finden, z.B. als Automobilteile, Armaturen, Elektroteile, z.B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile etc.

## Beispiel

In einem mit Rührer und Destillationsaufsatz ausgerüsteten Autoklaven aus Zirkonium werden 7,65 g Essigsäureanhydrid (0,075 Mol), 129,6 g Natriumsulfid-trihydrat (1,0 Mol $Na_2S$) und 300 g N-Methyl-2-pyrrolidon langsam bis auf 176° C aufgeheizt, wobei 6 ml Destillat aufgefangen werden, das größtenteils aus Wasser besteht. Im Reaktionsgemisch befindliches Natriumhydrogensulfid kann gegebenenfalls durch eine entsprechende Menge von

Natriumhydroxid (Pulver) in Natriumsulfid umgewandelt werden, wobei das durch die Neutralisation entstehende Wasser im Zuge der Destillation entfernt wird.

Anschließend wurden 142,6 g p-Dichlorbenzol (0,97 Mol) und 1,4 g 1,2,4-Trichlorbenzol (0,08 Mol) in 120 g N-Methyl-2-pyrrolidon zudosiert und der Ansatz in 90 Minuten von 200° C auf 240° hochgeheizt und 300 Minuten bei dieser Temperatur gehalten. Nach Reaktionsende läßt man auf 150° C abkühlen, entspannt und entnimmt das Reaktionsgemisch. Das entstandene p-Polyphenylensulfid wird durch Versetzen des Reaktionsgemisches mit Wasser, das entsprechende Mengen Salzsäure zur Neutralisation von basischen Anteilen im Ansatz enthält, und anschließendes Filtrieren isoliert. Man wäscht mit Wasser elektrolytfrei und gegebenenfalls kurz mit Ethanol nach. Das p-Polyphenylensulfid wird nach Trocknen als grau-weißer Feststoff gehalten.
Schmelzviskosität $\eta m$ = 2.070 Pa.s (bei $\tau$ = $10^2$ Pa).

## Ansprüche

1. Verfahren zur Herstellung von gegebenenfalls verzweigten Polyarylensulfiden nach den bekannten Verfahren aus
a) 50 bis 100 Mol-% Dihalogenaromaten der Formel

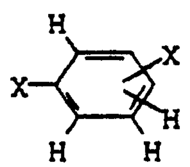

(I),

und 0 bis 50 Mol-% Dihalogenatomen der Formel

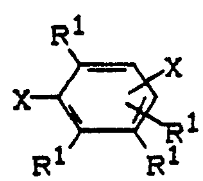

(II),

in denen
X für zueinander meta- oder para-ständiges Halogen wie Chlor oder Brom steht und
$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander ortho-ständige Reste $R^1$ zu einem aromatischen oder heterocyclischen, bis zu drei Heteroatome wie N, O, S enthaltenden Ring verknüpft sein können und immer ein Rest $R^1$ verschieden von Wasserstoff ist und
b) 0 bis 5 Mol-%, bevorzugt 0,1 bis 2,5 Mol-%, bezogen auf die Summe der Dihalogenatomen der Formeln (I) und (II), eines Tri- oder Tetrahalogenaromaten der Formel
$ArX_n$ (III),
wobei
Ar ein aromatischer oder heterocyclischer Rest ist,
X für Halogen wie Chlor oder Brom steht und
n für die Zahl 3 oder 4 steht und
c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von (a+b):c im Bereich von 0,5:1 bis 1,5:1, bevorzugt von 0,75:1 bis 1,25:1, liegen kann, in
d) einem organischen Lösungsmittel und gegebenenfalls einem Katalysator,
dadurch gekennzeichnet, daß die Umsetzung in einer Apparatur durchgeführt wird, in der zumindest diejenigen Teile der Apparatur, die mit der Reaktionslösung, vorzugsweise der zu entwässernden Sulfidlösung in Berührung kommen, aus speziellen Materialien gebaut sind oder mit speziellen Materialien beschichtet sind, ausgewählt aus der Gruppe von für diesen Zweck besonders geeigneten Metallen wie Edelmetallen wie Platin, Rhodium, Zirkon, Tantal, Superferrit oder inerten Polymeren wir Teflon, PPS.

2. Verfahren nach Anspruch 1, dadurch gekennzeichnet, daß als spezielles Material Zirkon verwendet wird.